# EUROPÄISCHE PATENTSCHRIFT

(11) **EP 1 183 148 B1**
(45) Veröffentlichungstag und Bekanntmachung des Hinweises auf die Patenterteilung: **25.06.2003**
(21) Anmeldenummer: 01940281.7
(22) Anmeldetag: 04.04.2001
(51) Int. Cl.: B29C 65/06, B23K 20/10, B25B 5/02

(54) **VERFAHREN ZUM POSITIONIEREN UND FIXIEREN VON BAUTEILEN**
METHOD FOR POSITIONING AND FIXING COMPONENTS
PROCEDE POUR POSITIONNER ET FIXER DES COMPOSANTS

(30) Priorität: 04.04.2000 DE 10016717
(43) Veröffentlichungstag der Anmeldung: 06.03.2002
(73) Patentinhaber: Conti Temic microelectronic GmbH, 90411 Nürnberg (DE)
(72) Erfinder: KÜCHEN, Thomas, 85051 Ingolstadt (DE)
(86) Internationale Anmeldenummer: EP0103764
(87) Internationale Veröffentlichungsnummer: WO01074567

(56) Entgegenhaltungen:
- DE-C- 807 848

## Beschreibung

Die Erfindung betrifft ein Verfahren zum Positionieren und Fixieren von Bauteilen.

Beim Vibrationsreibschweißen von Kunststoffen, insbesondere thermoplastischen Polymerstoffen, werden zwei Kunststoffteile durch eine oszillierende Relativbewegung unter Druck so lange gegeneinander gerieben, bis der Kunststoff schmilzt und sich eine homogene Schmelzzone bildet. Nach Beendigung der Relativbewegung erstarrt die Schmelze und es entsteht eine Fügenaht. Um beispielsweise die Kunststoffteile am Vibrationsreibschweißgerät zu fixieren, werden Aufnahmevorrichtungen benötigt. Die Aufnahmevorrichtungen für deckelförmige Kunststoffteile sind bisher so aufgebaut, dass sie eine tellerförmige Aussparung im Innern aufweisen, in die ein Kunststoffteil, beispielsweise der zu verschweißende Gehäusedeckel eingelegt wird. Da die Kunststoffteile nicht immer exakt die gleichen Abmessungen aufweisen, sondern Herstelltoleranzen unterliegen, muss die Aussparung immer so bemessen sein, dass auch das Kunststoffteil mit der größten zulässigen Abmessung in der Aussparung aufgenommen werden kann. Auch weisen die Werkzeuge im Innern der tellerförmigen Aussparungen sogenannte Rauhtierungen auf, das heißt, die Oberfläche des Werkzeuges ist derart beschaffen, dass eine möglichst große Haftung zwischen Aufnahmevorrichtung und eingelegtem Kunststoffteil beim Zusammenpressen der beiden Kunststoffteile vorhanden ist, um ein Verrutschen des Kunststoffteils in der Aufnahmevorrichtung beim Zusammenschweißen zu vermeiden.

DE-A-807 848 zeigt die Verfahrensschritte a) und b) des Anspruches 1. **Nachteilig** bei diesem Verfahren ist jedoch, dass sichtbare Eindrückspuren auf der Kunststoffoberfläche aufgrund der Rauhtierung des Werkzeugs zurückbleiben.

Aufgrund der Toleranzuntsischiede können die Kunststoffteile in der Aussparung der Aufnahmevorrichtung nicht exakt positioniert bzw. bei runden Bauformen zentriert werden. Ein Mitschwingen des Kunststoffteils innerhalb der festen Aussparung ist unvermeidbar. Daraus ergeben sich wiederum Energieverluste, die bewirken, dass sich die Schweißzeiten verlängern. Ferner verschlechtert sich die Maßhaltigkeit des zusammengeschweißten Gehäuses und die Güte der Schweißverbindung. Ein weiterer Nachteil ist, dass für unterschiedliche Kunststoffteile separate Aufnahmevorrichtungen verwendet werden müssen. Auch können Kunststoffteile, die einen Rotationskörper ausbilden, mit einer solchen Aufnahmevorrichtung nur schwer verschweißt werden.

**Aufgabe der Erfindung** ist es, ein Verfahren zum Positionieren und Fixieren von Bauteilen aufzuzeigen, mit dem insbesondere das Mitschwingen des Kunststorfteils beim Vibrationsreibschweißen verhindert wird und bei dem Gehäusetoleranzen ausgeglichen und Gehäuseteile exakt positioniert werden. Eine weitere Aufgabe der Erfindung ist es, mit ein und derselben Aufnahmevorrichtung auch unterschiedliche Kunststoffteile aufzunehmen, so dass nur ein Halter für verschiedene Kunststoffteile verwendet wird.

Die **Aufgabe** wird durch die Merkmale der Patentansprüche 1 und 2 **gelöst.** Hierbei werden nach dem Einlegen der Bauteile in eine erste Aufnahmevorrichtung diese und eine zweite Aufnahmevorrichtung zusammengedrückt, wobei die zweite Aufnahmevorrichtung eine Montagevorrichtung und eine Spannvorrichtung, die beweglich zueinander angeordnet sind, aufweist. Durch den Kontaktdruck zwischen den Aufnahmevorrichtungen wird die Montageplatte relativ zur Spannvorrichtung bewegt und über ein Getriebe wird diese Bewegung in eine andere Bewegung umgewandelt, welche die Spannvorrichtung zum Positionieren und Fixieren eines Bauteils betätigt.

Die **Vorteile der Erfindung** sind, dass die Toleranzen, die bei der Herstellung der Bauteile auftreten können, ausgeglichen werden. Mit diesem Verfahren lassen sich alle Bauteile, auch rotationssymmetrische exakt positionieren und fixieren.

**Vorteilhafte Weiterbildungen** ergeben sich aus den abhängigen Ansprüchen. Hierbei wird eine Aufnahmevorrichtung zur Durchführung des Verfahrens dargestellt. Welche aus einer Montageplatte und einer Spannvorrichtung besteht, die beweglich miteinander verbunden sind und die ein Getriebe aufweisen. Hierbei besteht das Getriebe aus einem Formkeil an der Montageplatte und/oder Formkeil an der Spannbacke, so dass beim Zusammendrücken von Montageplatte und Spannbacke die Spannbacke am Formkeil entlang bewegt wird und gespannt wird. Gleichfalls kann als Getriebe zusätzlich oder allein ein zwischen Montageplatte und Spannbacke schräg angebrachter Führungsstift verwendet werden, der sich in einer gleichfalls schräg angebrachten Führungsbohrung befindet. Eine gleichfalls vorteilhafte Weiterbildung besteht im Aufbau der Spannvorrichtung, die eine Führungsschiene aufweist, auf der sich ein oder mehrere Spannbacken entlang bewegen. Auch kann die Führungsschiene selbst eine Aufliegefläche ausbilden oder aber es kann an ihr eine Auflageplatte befestigt sein. Ferner wird die vorteilhafte Verwendung des Verfahrens bzw. der Aufnahmevorrichtung beim Vibrationsreibschweißen dargestellt. Bei der Vibration entstehen dann keine Energieverluste durch Mitschwingen der Bauteile. Die Schweißzeiten werden verkürzt und sind nicht mehr chargenbezogen, das heißt abhängig vom Werkzeug, das für die Herstellung des Kunststoffteils verwendet wurde. Ein weiterer Vorteil ergibt sich aus der hohen Positioniergenauigkeit z.B. des Deckels über dem Gehäuse. Auch öffnet sich das Gehäuse selbstständig, wenn der Schweißdruck weggenommen wird. Die verschweißten Kunststoffteile können nicht hängen bleiben. Auch stellt sich das Werkzeug bei Verschleiß selbst nach. Ein weiterer Vorteil besteht darin, dass auch rotationssymmetrische Kunststoffteile in dieser Aufnahmevorrichtung so fixiert sind, dass sie gleichfalls verschweißt werden können. Ferner ist es mit einem solchen Aufbau möglich, mit ein und derselben Aufnahmevorrichtung unterschiedliche Kunststoffteile aufzunehmen, so dass nicht mehr zwingend für verschiedene Kunststoffteile unterschiedliche Aufnahmevorrichtungen verwendet werden müssen. Des weiteren sollen die Schweißzeiten reduziert und die Schweißergebnisse verbessert werden.

Die Erfindung soll nachfolgend anhand von Ausführungsbeispielen und Figuren näher erläutert werden. Kurze Beschreibung der Figuren:
- Figur 1: Aufnahmevorrichtung zum Vibrationsreibschweißen mit aufzunehmendem Deckel.
- Figur 2: Schnittdarstellung einer Aufnahmevorrichtung zum Vibrationsreibschweißen im entspannten Zustand mit Formkeil an der Montageplatte.
- Figur 3: Bestandteile einer Aufnahmevorrichtung zum Vibrationsreibschweißen.
- Figur 4: Schnittdarstellung einer Aufnahmevorrichtung zum Vibrationsreibschweißen im gespannten Zustand mit Formkeil an der Montageplatte.
- Figur 5: Schnittdarstellung der Bestandteile der Aufnahmevorrichtung zum Vibrationsreibschweißen.
- Figur 6: Schnittdarstellung einer Aufnahmevorrichtung zum Vibrationsreibschweißen im entspannten Zustand mit schräg eingesetztem Führungsstift in einer schrägen Führungsbohrung zwischen Montageplatte und Spannbacke.

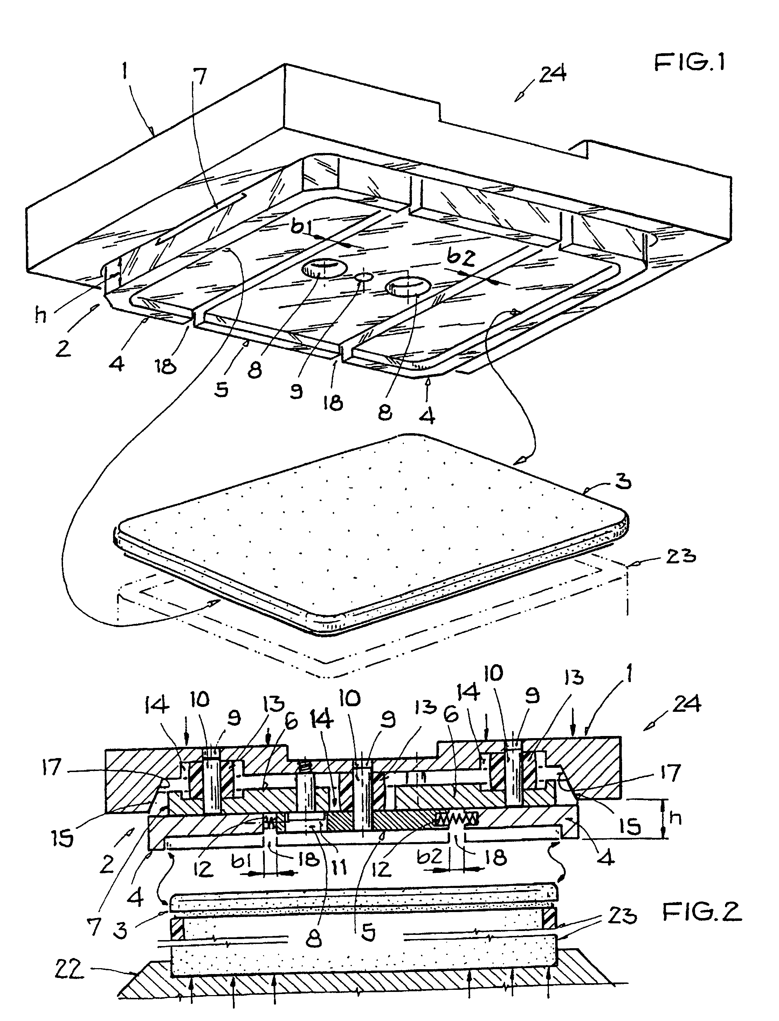

**Figur 1** zeigt eine Aufnahmevorrichtung zum Vibrationsreibschweißen mit aufzunehmendem Deckel. Die Aufnahmevorrichtung besteht im wesentlichen aus einer Montageplatte **1** und einer Spannvorrichtung **2,** die zum Einspannen eines Kunststoffteils **3,** insbesondere eines Deckels dient. Die Spannvorrichtung **2** ist teilweise in der Montageplatte **1** angeordnet, und zwar derart, dass nur ein Teil mit der verbleibenden Höhe **h** der Spannvorrichtung aus der Montageplatte **1** herausragt. Die Höhe **h** kann durch Zusammendrücken der Anordnung verändert werden, da Montageplatte **1** und Spannvorrichtung **4** vertikal beweglich zueinander angeordnet sind. Die in dieser Abbildung sichtbaren Teile der Spannvorrichtung **2** sind die Spannbacken **4,** in deren Mitte sich eine Auflageplatte **5** befindet. Zwischen der Auflageplatte und jeder Spannbacke sind zwei Spalten **18** sichtbar, deren Breiten **b**_{**1**} und **b**_{**2**} von der Höhe **h** abhängig sind. Ferner weist die Auflageplatte drei Bohrungen **8, 9** auf. In den beiden Ankerschraubenbohrungen **8** befinden sich die Ankerschrauben, die einerseits mit der Spannvorrichtung **2** beweglich verankert und andererseits mit der Montageplatte **1** fest verschraubt sind, so dass die Spannvorrichtung **2** in die schalenförmige Aussparung der Montageplatte **1** bewegt werden kann. Zwischen den beiden Ankerschraubenbohrungen **8** ist eine Führungsbohrung **9** sichtbar, in der sich ein Führungsstift befindet, der die Bewegungsmöglichkeiten zwischen Montageplatte **1** und Spannvorrichtung **2** auf einen Freiheitsgrad einengt. Das heißt die Spannvorrichtung **2** kann im Anwendungsbeispiel nur in vertikaler Richtung auf die Montageplatte **1** zu bzw. weg bewegt werden. Bewegt sich die Spannvorrichtung **2** in vertikaler Richtung, so werden die Spannbacken **4** über ein in dieser Abbildung nicht sichtbares Getriebe in horizontaler Richtung bewegt und können dadurch ein Bauteil fixieren und positionieren.

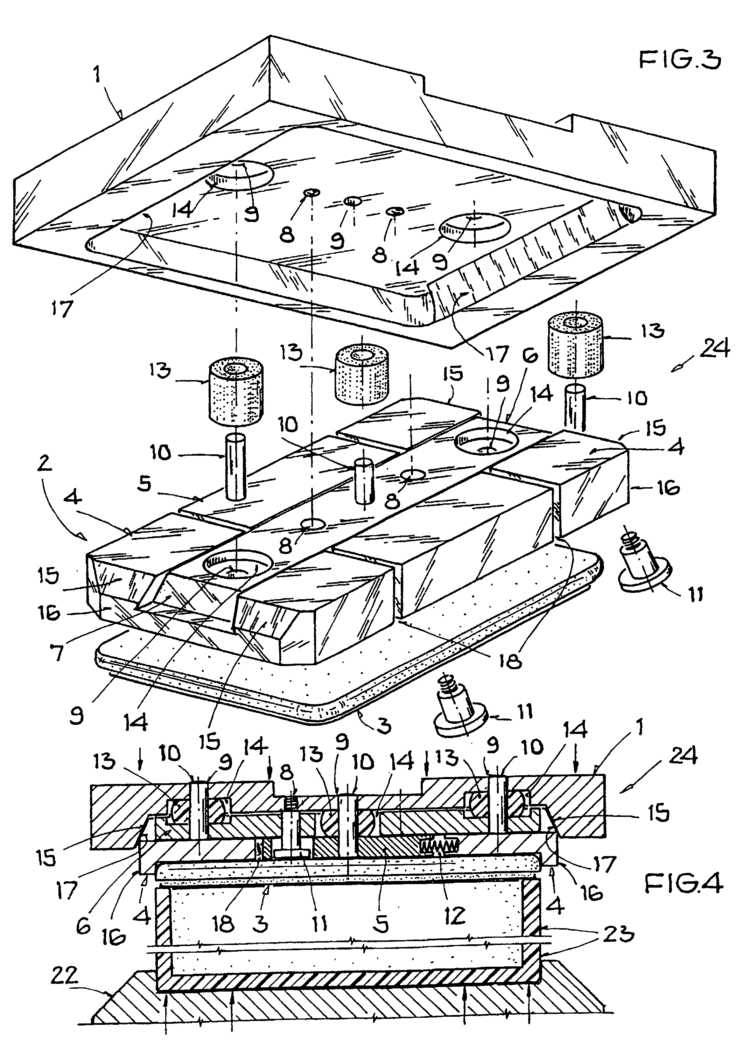

**Figur 2** zeigt eine Schnittdarstellung durch die Aufnahmevorrichtung **24,** wie in Figur 1 abgebildet, im entspannten Zustand der Spannbacken. Auf die Darstellung des an der Montageplatte **1** der Aufnahmevorrichtung angebrachten Schwingkopfes wurde verzichtet. Unter der Aufnahmevorrichtung **24** befindet sich eine weitere Aufnahmevorrichtung **22** mit den zu verschweißenden Kunststoffteilen **3, 23.** Die obere Aufnahmevorrichtung **24** weist eine schalenförmige Montageplatte **1** auf. Diese schalenförmige Montageplatte **1** weist am Boden Bohrungen **8, 9** auf, die als Führungsvorrichtung dienen und in denen sich Führungsstifte **10** und Ankerstifte **11** befinden, wobei die Ankerstifte **11** an ihrem dünnen Ende fest mit der Montageplatte **1** verbunden, beispielsweise angeschraubt sind. Die Seitenwandung der schalenförmigen Montageplatte ist an der Innenfläche der Seitenwand zumindest partiell angeschrägt, so dass die Seitenwandinnenfläche zumindest teilweise einen Formkeil **17** ausbildet. Hierbei nimmt die Wandstärke in Richtung des Bodens der Montageplatte **1** zu. Auf dem Boden der Montageplatte **1** befinden sich konzentrisch um die vertikalen Bohrungen **8, 9,** in denen die Führungsstifte **10** angeordnet sind, Druckteile **13,** die im Anwendungsbeispiel als Gummifeder ausgebildet sind. Auf den Gummifedern **13** im Innern der schalenförmigen Montageplatte **1** befindet sich eine Führungsvorrichtung **6** für die Spannbacken **4.** Die Führungsvorrichtung **6** ist in diesem Anwendungsbeispiel als Führungsschiene angeordnet und ist Bestandteil der Spannvorrichtung **2.** Diese Führungsschiene **6** ist durch die Ankerstifte **11** mit der Montageplatte **1** lose verbunden. Das heißt, Montageplatte **1** und Führungsschiene **6** sind nicht formschlüssig miteinander verschraubt, sondern weisen einen Zwischenraum auf. Auch sind in der Führungsschiene **6** deckungsgleich zu den Führungsbohrungen **9** im Boden der Montageplatte **1** weitere Führungsbohrungen **9** angeordnet. An der Führungsschiene **6** sind, über eine in dieser Abbildung nicht sichtbare formschlüssige Schwalbenschwanzverbindung **7,** an den Seiten zwei Spannbacken **4** angebracht Die beiden Spannbacken **4** können in horizontaler Richtung auf der Führungsschiene **6** hin und her gleiten. Zwischen den beiden Spannbacken **4** befindet sich eine Platte **5,** welche unter anderem dazu dient, die Auflagefläche für den Deckel **3** zu vergrößern. Diese Auflageplatte **5** ist gleichfalls über eine in dieser Darstellung nicht sichtbare Schwalbenschwanzverbindung mit der Führungsschiene **6** verbunden. Sie weist deckungsgleich zur Montageplatte **1** und zur Führungsschiene **6** eine weitere Bohrung **9** auf, in die ein Führungsstift **10** eingebracht wird, der dazu dient, die Auflageplatte **5** in horizontaler Richtung zu fixieren. Zwischen der Auflageplatte **5** und den beiden Spannbacken **4** befindet sich jeweils ein Spalt **18** mit den Breiten **b**_{**1**} und **b**_{**2**}**.** In diesen Spalten **18** befinden sich Gummifedern **12.** Die beiden Spannbacken **4** und die Auflageplatte **5** bilden die Spannvorrichtung **2,** in der sich später der Deckel **3** zum Verschweißen mit dem Becher **23** befindet, die wiederum in einer anderen Aufnahmevorrichtung **22** angeordnet sind.

**Figur 3** zeigt die Bestandteile der Aufnahmevorrichtung **24** zum Vibrationsreibschweißen. Oben ist die schalenförmige Montageplatte **1** abgebildet. Diese schalenförmige Montageplatte **1** weist Montagevorrichtungen auf, die zur Befestigung der Aufnahmevorrichtung an einen Schwingkopf dienen, mit dem die Vibration zum Schweißen erzeugt wird. Diese Montagevorrichtungen sind jedoch in den Abbildungen nicht näher dargestellt. Gleichfalls im Boden befinden sich Bohrungen **8, 9,** die als Führungsvorrichtung für die Führungsstifte **10** dienen und in denen Ankerschrauben **11** angeordnet sind, wobei die Ankerschrauben **11** an ihrem dünnen Ende fest mit der Montageplatte 1 verbunden sind, wie bereits in Figur 2 dargestellt. Die Seitenwandung der schalenförmigen Montageplatte **1** ist an der Innenfläche der Seitenwand zumindest partiell angeschrägt, so dass die Seitenwandinnenfläche einen Formkeil **17** ausbildet. Die Wandstärke nimmt in Richtung des Bodens der Montageplatte zu. Auf dem Boden der Montageplatte **1** befinden sich konzentrisch um die vertikalen Bohrungen, in denen die Führungsstifte **10** angeordnet sind, Druckteile **13,** die im Anwendungsbeispiel als Gummifeder ausgebildet sind. Auf den Gummifedern **13** im Innern der schalenförmigen Montageplatte befindet sich eine Führungsvorrichtung **6** für die Spannbacken **4.** Die Führungsvorrichtung **6** ist in diesem Anwendungsbeispiel als Führungsschiene angeordnet. Diese Führungsschiene **6** ist durch die Ankerschrauben **11** mit der Montageplatte **1** verbunden. Jedoch sind Montageplatte **1** und Führungsschiene **6** nicht fomschlüssig miteinander verschraubt, sondern weisen einen Zwischenraum auf. Auch sind in der Führungsschiene **6** deckungsgleich zu den Führungsbohrungen **9** im Boden der Montageplatte **1** weitere Führungsbohrungen **9** angeordnet. Die Führungsschiene **6** ist schwalbenschwanzförmig aufgebaut. An der Führungsschiene **6** sind über eine formschlüssige Schwalbenschwanzverbindung **7** an den Seiten zwei Spannbacken **4** angebracht. Die beiden Spannbacken **4** können in horizontaler Richtung auf der Führungsschiene **6** hin und her gleiten. Zwischen den beiden Spannbacken **4** befindet sich eine Platte **5,** welche unter anderem dazu dient, die Auflagefläche für das Kunststoffteil **3** zu vergrößern. Diese Auflageplatte **5** ist gleichfalls über eine Schwalbenschwanzverbindung **7** mit der Führungsschiene **6** verbunden, jedoch weist sie deckungsgleich zur Montageplatte **1** und zur Führungsschiene **6** Bohrungen **9** auf, in die Führungsstifte **10** eingebracht werden und die dazu dienen, die Auflageplatte **5** in horizontaler Richtung zu fixieren. Zwischen der Auflageplatte **5** und den beiden Spannbacken **4** befindet sich jeweils ein Spalt **18.** In diesem Spalt befinden sich Gummifedern **12,** die in dieser Abbildung nicht sichtbar sind. Die Führungsschiene **6,** die beiden Spannbacken **4** und die Auflageplatte **5** bilden die Spannvorrichtung **2,** in der sich später beim Vibrationsreibschweißen das Kunststoffteil **3** befindet. Durch die beweglichen Spannbacken **4** kann das Kunststoffteil **3** in die Spannvorrichtung **2** eingespannt werden. Der Formkeil **17** an der Montageplatte **1** und der Formkeil **15** an der Stirnfläche einer Spannbacke **4** bilden ein Keilgetriebe, das die Vertikalbewegung von der Spannbacke **4** in der Montageplatte **1** in eine horizontale Bewegung der Spannbacke **4** umwandelt. Jedoch ist ein Formkeil für das Keilgetriebe ausreichend. Auch können die Stirnseiten **16** der Spannbacken **4** gerade verlaufen.

Wird nun, wie in **Figur 4** dargestellt, der Kontaktdruck zwischen den beiden Aufnahmevorrichtungen **22, 24** aufgebaut, wird der Deckel **3** mit der Spannvorrichtung **2** gegen die geringeren Druckkräfte der Gummifedern **13** nach oben bewegt. Die Spannvorrichtung **2** wird mit dem Deckel **3** parallel zum Gehäuse **23** bewegt. Die schiefe Ebene **17** an der Montageplatte **1** bzw. an der Spannvorrichtung **15** bewirken eine Spannbewegung, die den Deckel **3** fixiert. Die Zugspannung wird durch den Deckel **3** begrenzt. Beim Öffnen der Aufnahmevorrichtungen **22, 24** expandieren die Druckteile **13** und die Spannbacken **4** werden entlang der schiefen Ebene geöffnet. Über die Ankerschrauben **11** kann die Vertikalbewegung und damit die Öffnung der Spannbacken **4** eingestellt werden. **Figur 4** zeigt die Schnittdarstellung der Aufnahmevorrichtung **24** zum Vibrationsreibschweißen mit Formkeil an der Montageplatte **1** im gespannten Zustand, das heißt der Schweißdruck zwischen den beiden oben erwähnten Kunststoffteilen ist zumindest teilweise aufgebaut. Wird auf der Unterseite der Aufnahmevorrichtung auf den Deckel **3** Druck ausgeübt, so werden die Gummifedern **13,** deren Kraft kleiner ist als die aufgebrachte Schweißkraft und die sich zwischen der Montageplatte **1** und der Führungsschiene **6** bzw. der Aufiagepfatte **5** befinden, zusammengedrückt. Die vertikal beweglich gelagerte Führungsschiene **6** mit den Spannbacken **4** und der Auflageplatte **5** bewegt sich entlang der Führungsstifte **10** und der Ankerschrauben **11** nach oben, solange bis sie auf die Montageplatte **1** treffen oder die gespannten Federgummis **13** oder eine andere Vorrichtung die entsprechende Gegenkraft aufbringen. Gelangen die Spannbacken **4** bzw. deren keilförmige Stirnseitenflächen **15** bedingt durch die druckbedingte Vertikalbewegung in den Formkeil **17** der Seitenwände der Montageplatte **1,** so werden die Spannbacken **4** zusammengedrückt bis der Deckel **3** formschlüssig von den Spannbacken **4** umschlossen ist. Der Formkeil **17** und die keilförmig verlaufende Stirnfläche **15** stellen ein Keilgetriebe dar, das eine vertikale Bewegung in eine horizontale Bewegung umwandelt. Dabei ist es unwesentlich, ob das Keilgetriebe einen oder mehrere Formkeile aufweist, die beispielsweise in Form einer abgeschrägten inneren bzw. äußeren Seitenwandung an der Montageplatte **1** oder an den Spannbacken **4** oder an der Montageplatte **1** und den Spannbacken **4** angebracht sind.

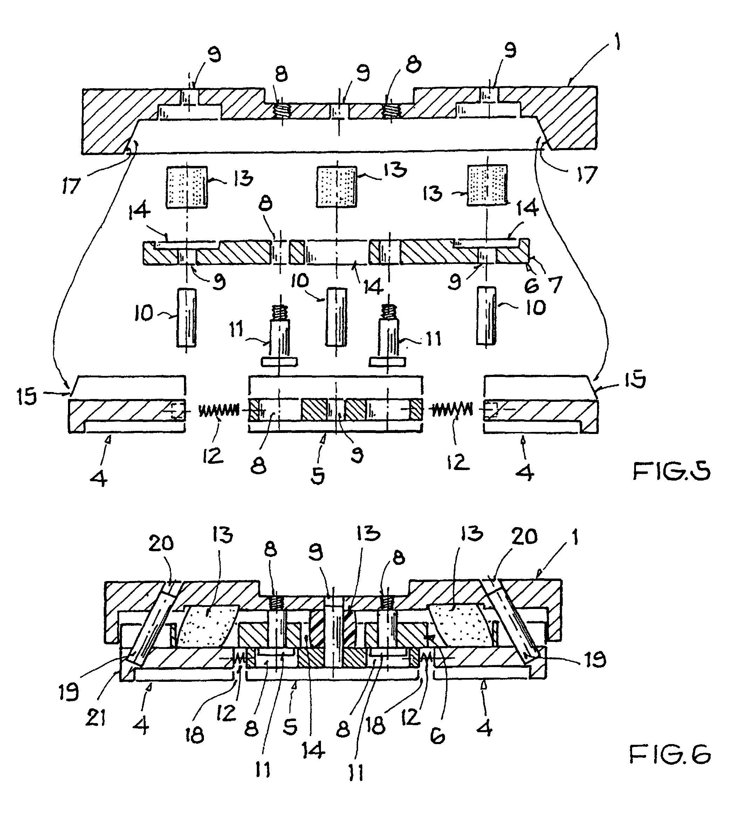

**Figur 5** zeigt eine Schnittdarstellung der Bestandteile der Aufnahmevorrichtung zum Vibrationsreibschweißen. Oben weist die Aufnahmevorrichtung eine schalenförmige Montageplatte **1** auf. Diese schalenförmige Montageplatte **1** weist am Boden Bohrungen **8, 9** auf, die als Führungsvorrichtung dienen und in denen sich Führungsstifte **10** und Ankerstifte **11** befinden, wobei die Ankerstifte **11** an ihrem dünnen Ende fest mit der Montageplatte **1** verbunden, beispielsweise angeschraubt sind. Die Seitenwandung der schalenförmigen Montageplatte ist an der Innenfläche der Seitenwand zumindest partiell angeschrägt, so dass die Seitenwandinnenfläche zumindest teilweise einen Formkeil **17** ausbildet. Hierbei nimmt die Wandstärke in Richtung des Bodens der Montageplatte **1** zu. Auf dem Boden der Montageplatte **1** befinden sich konzentrisch um die vertikalen Bohrungen **8, 9,** in denen die Führungsstifte **10** angeordnet sind, Druckteile **13,** die im Anwendungsbeispiel als Gummifeder ausgebildet sind. Auf den Gummifedern **13** im Innern der schalenförmigen Montageplatte **1** befindet sich eine Führungsvorrichtung **6.** Die Führungsvorrichtung **6** ist in diesem Anwendungsbeispiel als Führungsschiene angeordnet und ist Bestandteil der Spannvorrichtung **2.** Diese Führungsschiene **6** ist durch die Ankerstifte **11** mit der Montageplatte 1 lose verbunden. Das heißt, Montageplatte **1** und Führungsschiene **6** sind nicht formschlüssig miteinander verschraubt, sondern weisen einen Zwischenraum auf. Auch sind in der Führungsschiene **6** deckungsgleich zu den Führungsbohrungen **10** im Boden der Montageplatte **1** weitere Führungsbohrungen **9** angeordnet. Die Führungsschiene **6** ist schwalbenschwanzförmig an den Seiten aufgebaut. Die beiden Spannbacken **4** mit einer schwalbenschwanzförmigen Aussparung können in horizontaler Richtung auf der schwalbenschwanzförmigen Führungsschiene **6** hin und her gleiten. Zwischen den beiden Spannbacken **4** befindet sich eine Platte **5,** welche unter anderem dazu dient, die Auflagefläche für den Deckel **3** zu vergrößern. Diese Auflageplatte **5** ist gleichfalls über eine in dieser Darstellung nicht sichtbare Schwalbenschwanzverbindung mit der Führungsschiene **6** verbunden. Sie weist deckungsgleich zur Montageplatte **1** und zur Führungsschiene **6** eine weitere Bohrung **9** auf, in die ein Führungsstift **10** eingebracht wird, die dazu dient, die Auflageplatte **5** in horizontaler Richtung zu fixieren. Zwischen der Auflageplatte **5** und den beiden Spannbacken **4** sich Federn **12,** die die Spannbacken auseinander drücken. Die Führungsschiene, die beiden Spannbacken **4** und die Auflageplatte **5** bilden die Spannvorrichtung **2,** in welcher der Deckel zum Verschweißen eingespannt wird.

Bei all den bisherigen Anwendungsbeispielen spielt es keine Rolle, ob sich die Formkeile **17, 15** an der Montageplatte **1** oder an der Spannbacke **4** oder an der Spannbacke und an der Montageplatte befinden. Ferner kann die Keilform verschiedene auch nicht kontinuierlich verlaufende Formen annehmen, um die Abhängigkeit von Schweißdruck und Spannung der Spannbacken zu variieren.

**Figur 6** zeigt eine Schnittdarstellung einer Aufnahmevorrichtung zum Vibrationsreibschweißen im entspannten Zustand mit schräg eingesetzten Führungsstiften **19** in einer schrägen Führungsbohrung **20** zwischen Montageplatte **1** und Spannbacke **4.** In dieser Abbildung besteht das Keilgetriebe aus einem schräg geführten Führungsstift **19.** Der Führungsstift **19** oder die Führungsstifte **19** sind hierbei an der Seite der Spannbacke **4** befestigt und zwar derart, dass sie schräg in Richtung der Montageplatte **1** verlaufen. In der Montageplatte **1** befindet sich eine schräge Führungsbohrung **20** und zwar in Verlängerung des schräg eingesetzten Führungsstiftes **19.** Wird nun auf die Spannbacken **4** ein vertikaler Druck ausgeübt, das heißt, ein Kunststoffteil wie beispielsweise ein Deckel, der sich zwischen den Spannbacken **4** befindet, wird auf ein anderes Kunststoffteil **4** gedrückt, so bewegt sich der Führungsstift **19** mit der Spannbacke **4** entlang der schrägen Führungsbohrung **20.** Durch die schräge Anordnung der Führungsstifte **19** und Führungsstiftbohrungen **20** werden die Spannbacken **4,** die sich beim Zusammendrücken gleichzeitig entlang der schwalbenschwanzförmigen Führungsschiene **6** bewegen, zusammengedrückt. Die schrägen Führungsstifte **19** verlaufen nicht innerhalb der Führungsschiene **6.** Diese wird wie in den bisherigen Beispielen mittels vertikaler Führungs- **10** und Ankerstifte **11** in Richtung der Montageplatte **1** geführt. Bei dieser Art von Keilgetriebe ist es von Vorteil, dass die Druckteile **13,** die sich an der Seite befinden und auf die Scherkräfte wirken, gleichfalls schräg angeordnet sind. Gleichfalls entfällt der Formkeil an der Montageplatte **1** und die Stirnfläche **21** der Spannbacke **4** verläuft geradlinig.

Auch können mehrere der unterschiedlichen Keilgetriebe zusammen in einen Halter eingesetzt werden. Ferner kann die Anzahl der Spannbacken beliebig erhöht werden, indem die Führungsschiene beispielsweise sternförmig geformt ist oder die Aufnahmevorrichtung mehrere Führungsschienen in verschiedene Richtungen aufweist, so dass auch unsymmetrische Kunststoffteile exakt fixiert werden können. Gleichfalls ist die Schwalbenschwanzverbindung zwischen Spannbacke und Führungsschiene nicht unbedingt erforderlich, sondern die horizontal bewegliche aber vertikal starre Verbindung kann auch durch andere Verbindungsformen hergestellt werden.

## Patentansprüche

1. Verfahren zum Positionieren und Fixieren eines ersten Bauteils (3) gegenüber einem zweiten Bauteil (23), in dem folgende Verfahrenschritte durchgeführt werden:
a) Einlegen des ersten und zweiten Bauteils (3, 23) in eine erste Aufnahmevorrichtung (22),
b) Bewegen der ersten Aufnahmevorrichtung (22) gegen eine zweite Aufnahmevorrichtung (24) oder umgekehrt, wobei die zweite Aufnahmevorrichtung (24) eine Montageplatte (1) und eine Spannvorrichtung (2) aufweist, die beweglich zueinander angeordnet sind und Aufbau eines Kontaktdrucks zwischen den beiden Aufnahmevorrichtungen (22, 24) über die Bauteile (3, 23),
c) Ergreifen des ersten Bauteils (3) mittels der Spannvorrichtung (2) während der Bewegung der Montageplatte (1) aufgrund des Kontaktdrucks und Erzeugung einer Spannbewegung zum Positionieren und Fixieren des ersten Bauteils (3) mittels wenigstens einem Getriebe, das die Bewegung der Aufnahmevorrichtung in die Spannbewegung umsetzt.

2. Aufnahmevorrichtung (24) zur Durchführung eines Verfahrens nach Patentanspruch 1
**dadurch gekennzeichnet, dass** die zweite Aufnahmevorrichtung (24) folgende Bestandteile aufweist:
- die Montageplatte (1),
- die Spannvorrichtung (2), die beweglich gelagerte Spannbacken (4) aufweist, zwischen denen das erste Bauteil (3) während des Aufbaus des Kontaktdrucks eingespannt wird, wobei
- die Spannvorrichtung (2) mit der Montageplatte (1) beweglich verbunden ist und
- sich die Spannvorrichtung (2) und die Montageplatte (1) während des Aufbaus des Kontaktdrucks einander nähern und
- dem Getriebe, insbesondere Keilgetriebe, das die Bewegung zwischen Montageplatte (1) und Spannvorrichtung (2) in eine Spannbewegung der Spannbacken (4) umsetzt.

3. Aufnahmevorrichtung (24) nach Patentanspruch 2, **dadurch gekennzeichnet, dass** das Getriebe einen Formkeil (17) an der Seitenwand der schalenförmigen Montageplatte (1) aufweist, an dem sich zumindest eine Spannbacke (4) entlang bewegt.

4. Aufnahmevorrichtung (24) nach Patentanspruch 2, **dadurch gekennzeichnet, dass** das Getriebe einen Formkeil (15) an zumindest einer Spannbacke (4) aufweist und dieser Formkeil (15) an der Seitenwand (17) der schalenförmigen Montageplatte (1) entlang bewegt wird oder die Seitenwand (17) entlang des Formkeils (15) bewegt wird.

5. Aufnahmevorrichtung (24) nach Patentanspruch 2, **dadurch gekennzeichnet, dass** das Getriebe mindestens einen zwischen einer Spannbacke (4) und der Montageplatte (1) schräg eingesetzten Führungsstift (19) in einer schräg verlaufenden Führungsbohrung (20) aufweist, mit denen die Spannbacke (4) bewegt wird.

6. Aufnahmevorrichtung (24) nach einem der Patentansprüche 2 bis 5, **dadurch gekennzeichnet, dass** die Spannvorrichtung (2) aus mindestens
- einer Auflageplatte (5), auf der das einzuspannende Bauteil (3) aufliegt,
- einer Spannbacke (4), in die das Bauteil (3) eingespannt wird, und
- einer Führungsschiene (6), an der sich die Spannbacke (4) entlang bewegt,
besteht.

7. Aufnahmevorrichtung (24) nach einem der Patentansprüche 2 bis 5, **dadurch gekennzeichnet, dass** die Spannvorrichtung (2) mindestens
- aus einer Führungsschiene (6), die eine Auflageplatte ausbildet, auf der das einzuspannende Bauteil (3) aufliegt und
- einer Spannbacke (4), mit der das Kunststoffteil (3) eingespannt wird und die sich entlang der Führungsschiene (6) bewegt,
besteht.

8. Verwendung für ein Verfahren nach Patentanspruch 1, **dadurch gekennzeichnet, dass** die Aufnahmevorrichtungen (22, 24) zum Vibrationsreibschweißen verwendet werden, wobei die beiden Bauteile (3, 23) solange gegeneinander gerieben werden, bis die beiden Bauteile (3, 23) aufschmelzen.

9. Verwendung für eine Aufnahmevorrichtung (24) nach Patentanspruch 2, **dadurch gekennzeichnet, dass** die Aufnahmevorrichtung (24) Bestandteil einer Vibrationsreibschweißvorrichtung ist und die Montageplatte (1) mit einer Vibrationseinheit verbunden ist.

10. Verwendung für ein Verfahren nach Patentanspruch 1, **dadurch gekennzeichnet, dass** die Aufnahmevorrichtungen (22, 24) zum Vibrationsoder Rotationsschweißen verwendet werden, wobei die beiden Bauteile (3, 23) solange gegeneinander bewegt werden, bis die beiden Bauteile (3, 23) aufschmelzen.

11. Verwendung für eine Aufnahmevorrichtung (24) nach Patentanspruch 2, **dadurch gekennzeichnet, dass** die Aufnahmevorrichtung (24) Bestandteil einer Vibrations- oder Rotationsschweißvorrichtung ist und die Montageplatte (1) mit einer Vibrations- oder Rotationseinheit verbunden ist.

## Claims

1. A method for positioning and fixing a first component (3) opposite a second component (23), said method comprising the steps of:
a) inserting said first and second components (3, 23) into a first receptacle (22),
b) moving said first receptacle (22) towards a second receptacle (24) or reversely, wherein said second receptacle (24) comprises a mounting plate (1) and a clamping device (2) being arranged movably relative to each other, and establishment of a contact pressure between said two receptacles (22, 24) via said components (3, 23),
c) gripping said first component (3) by means of said clamping device (2) during the movement of said mounting plate (1) due to the contact pressure, and execution of a clamping movement for positioning and fixing said first component (3) by means of at least one gear translating the movement of the receptacle into a clamping movement.

2. A receptacle (24) for implementing a method according to claim 1,
**characterised in that** said second receptacle (24) comprises the following components:
- said mounting plate (1),
- said clamping device (2) comprising clamping jaws (4) being movably attached, between which said first component (3) is clamped during the establishment of the contact pressure, wherein
- said clamping device (2) is movably attached to said mounting plate (1), and
- said clamping device (2) and said mounting plate (1) get nearer to one another, and
- the gear, in particular a wedge gear, which translates the movement between said mounting plate (1) and said clamping device (2) into a clamping movement of said clamping jaws (4).

3. A receptacle (24) according to claim 2, **characterised in that** said gear comprises a formed wedge (17) on the side wall of said tray-shaped mounting plate (1) along which wedge at least one clamping jaw (4) is moving.

4. A receptacle (24) according to claim 2, **characterised in that** said gear comprises a formed wedge (15) on at least one clamping jaw (4) with said formed wedge (15) being moved along the side wall (17) of said tray-shaped mounting plate (1) or said side wall (17) being moved along said formed wedge (15).

5. A receptacle (24) according to claim 2, **characterised in that** said gear comprises at least one guiding pin (19) being obliquely inserted between one clamping jaw (4) and said mounting plate (1) in an oblique borehole for moving said clamping jaw (4).

6. A receptacle (24) according to any of claims 2 through 5, **characterised in that** said clamping device (2) comprises at least
- one resting plate (5) on which said component (3) to be clamped is resting,
- one clamping jaw (4) into which said component (3) is clamped, and
- one guiding rail (6) along which said clamping jaw (4) is moving.

7. A receptacle (24) according to any of claims 2 through 5, **characterised in that** said clamping device (2) comprises at least
- one guiding rail (6) forming a resting plate on which said component (3) to be clamped is resting,
- one clamping jaw (4) into which said plastic component (3) and which moves along said guiding rail.

8. Utilisation of a method according to claim 1, **characterised in that** said receptacles (22, 24) are used in frictional vibration welding, wherein said two components (3, 23) are rubbed against each other until said two components (3, 23) are melted on each other.

9. Utilisation of a receptacle (24) according to claim 2, **characterised in that** said receptacle (24) is part of a frictional vibration welding device with said mounting plate (1) being connected with a vibrating unit.

10. Utilisation of a method according to claim 1, **characterised in that** said receptacles (22, 24) are used for vibration or rotation welding, wherein said two components (3, 23) are moved against each other until said two components (3, 23) are melted on each other.

11. Utilisation of a receptacle (24) according to claim 2, **characterised in that** said receptacle (24) is part of a vibration or rotation welding device with said mounting plate (1) being connected with a vibrating or rotating unit.

## Revendications

1. Procédé de positionnement et de fixation d'une première pièce de construction (3) par rapport à une seconde pièce de construction (23), où les phases suivantes sont exécutées :
a) insertion de la première et de la seconde pièce de construction (3, 23) dans un premier dispositif de logement (22),
b) déplacement du premier dispositif de logement (22) contre un second dispositif de logement (24), ou l'inverse, le second dispositif de logement (24) présentant une plaque de montage (1) et un mécanisme de serrage (2) mobiles l'un par rapport à l'autre, et génération d'une pression de contact entre les deux dispositifs de logement (22, 24) par les pièces de construction (3, 23).
c) saisie de la première pièce de construction (3) par le mécanisme de serrage (2) pendant le déplacement de la plaque de montage (1) en conséquence de la pression de contact, et génération d'un mouvement de serrage pour le positionnement et la fixation de la première pièce de construction (3) au moyen d'un engrenage au moins, lequel convertit le déplacement du dispositif de logement en mouvement de serrage.

2. Dispositif de logement (24) pour l'application d'un procédé selon revendication 1
**caractérisé en ce que** le second dispositif de logement (24) présente les composants suivants :
- la plaque de montage (1),
- le mécanisme de serrage (2), présentant des mâchoires de serrage (4) mobiles entre lesquelles la première pièce de construction (3) est serrée pendant la génération de la pression de contact,
- le mécanisme de serrage (2) étant librement raccordé à la plaque de montage (1),
- le mécanisme de serrage (2) et la plaque de montage (1) se rapprochant l'un de l'autre pendant la génération de la pression de contact, et
- l'engrenage, notamment à clavette, convertissant le déplacement entre plaque de montage (1) et mécanisme de serrage (2) en un mouvement de serrage des mâchoires (4).

3. Dispositif de logement (24) selon revendication 2, **caractérisé en ce que** l'engrenage présente une clavette moulée (17) sur la paroi latérale de la plaque de montage (1) en forme de coupe, le long de laquelle se déplace une mâchoire de serrage (4) au moins.

4. Dispositif de logement (24) selon revendication 2, **caractérisé en ce que** l'engrenage présente une clavette moulée (15) sur une mâchoire de serrage (4) au moins, et que ladite clavette moulée (15) est déplacée le long de la paroi latérale (17) de la plaque de montage (1) en forme de coupe, ou que la paroi latérale (17) est déplacée le long de la clavette moulée (15).

5. Dispositif de logement (24) selon revendication 2, **caractérisé en ce que** l'engrenage présente au moins une goupille-guide (19) disposée en oblique entre une mâchoire de serrage (4) et la plaque de montage (1) dans un alésage de guidage percé en oblique, avec laquelle la mâchoire de serrage (4) est déplacée.

6. Dispositif de logement (24) selon l'une des revendications 2 à 5, **caractérisé en ce que** le mécanisme de serrage (2) consiste au moins en
- une plaque d'appui (5) sur laquelle repose la pièce de construction (3) à serrer,
- une mâchoire de serrage (4) dans laquelle la pièce de construction (3) est serrée,
- et un rail de guidage (6), le long duquel se déplace la mâchoire de serrage (4).

7. Dispositif de logement (24) selon l'une des revendications 2 à 5, **caractérisé en ce que** le mécanisme de serrage (2) consiste au moins en
- un rail de guidage (6) formant une plaque d'appui sur laquelle repose la pièce de construction (3) à serrer,
- et une mâchoire de serrage (4) avec laquelle la pièce plastique (3) est serrée, et qui se déplace le long du rail de guidage (6).

8. Application pour un procédé selon revendication 1, **caractérisée en ce que** les dispositifs de logement (22, 24) sont utilisés pour soudage par friction vibratoire, les deux pièces de construction (3, 23) étant frottées l'une contre l'autre jusqu'à fusion des deux pièces de construction (3, 23).

9. Application pour un dispositif de logement (24) selon revendication 2, **caractérisée en ce que** le dispositif de logement (24) est composant d'un dispositif de soudage par friction vibratoire, et que la plaque de montage (1) est reliée à une unité vibratoire.

10. Application pour un procédé selon revendication 1, **caractérisée en ce que** les dispositifs de logement (22, 24) sont utilisés pour soudage par vibrations ou par rotation, les deux pièces de construction (3, 23) étant déplacées l'une contre l'autre jusqu'à fusion des deux pièces de construction (3, 23).

11. Application pour un dispositif de logement (24) selon revendication 2, **caractérisée en ce que** le dispositif de logement (24) est composant d'un dispositif de soudage par vibrations ou par rotation, et que la plaque de montage (1) est reliée à une unité de vibrations ou de rotation.
